(19) Europäisches Patentamt / European Patent Office / Office européen des brevets

(11) **EP 2 551 648 A1**

(12) **EUROPEAN PATENT APPLICATION**

(43) Date of publication:
**30.01.2013 Bulletin 2013/05**

(21) Application number: **11305994.3**

(22) Date of filing: **29.07.2011**

(51) Int Cl.:
*G01F 1/74* (2006.01)      *G01F 15/08* (2006.01)
*G01F 25/00* (2006.01)      *G01N 9/24* (2006.01)
*G01N 23/12* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
• **Services Pétroliers Schlumberger**
  **75007 Paris (FR)**
  Designated Contracting States:
  **AL FR RS**
• **Schlumberger Technology B.V.**
  **2514 The Hague (NL)**
  Designated Contracting States:
  **AL BG CZ DE DK GR HU IE IT LT MK NO PL RO
  RS SI SK SM TR**
• **Schlumberger Holdings Limited**
  **Tortola (VG)**
  Designated Contracting States:
  **AL GB NL RS**
• **PRAD Research and Development**
  **Tortola (VG)**
  Designated Contracting States:
  **AL AT BE CH CY EE ES FI HR IS LI LU LV MC MT
  PT RS SE**

(72) Inventors:
• **Abyzov, Andrij**
  **5252 BERGEN (NO)**
• **Aksnes, Kyrre**
  **5254 SANDSLI (NO)**
• **Al-Abbas, Sabah**
  **5225 BERGEN (NO)**
• **Baker, Andrew**
  **5300 KLEPPESTO (NO)**
• **Lupeau, Alexandre**
  **5862 Bergen (NO)**
• **Noel, Jean-Francois**
  **5252 SOREIDGREND (NO)**
• **Rolf, Rustad**
  **5235 RADAL (NO)**
• **Seime, Lars**
  **5063 BERGEN (NO)**
• **Zhdaneev, Oleg**
  **5862 Bergen (NO)**

(74) Representative: **Vandermolen, Mathieu**
  **Etudes & Productions Schlumberger**
  **IP Department**
  **1, rue Henri Becquerel**
  **B.P. 202**
  **92142 Clamart (FR)**

(54) **A multiphase flowmeter and a correction method for such a multiphase flowmeter**

(57)   An apparatus (1) for measuring a flow rate of a multiphase fluid mixture (13) comprising at least one gas phase (40) and one liquid phase (50), the apparatus comprising a multiphase flow meter (101) comprising:
- a pipe section (21) through which the multiphase fluid mixture (13) flows comprising a measurement section (24);
- a fraction measurement device (33, 34) located in the measurement section (24) estimating a representative fraction of at least one of the gas phase (40) and the liquid phase (50) of the multiphase fluid mixture (13) passing at the measurement section (24);
wherein the multiphase flow meter (101) further comprises a reference measurement apparatus (102) coupled to the multiphase flow meter (101) for providing an in-situ composition measurement of an extracted sample (103), the reference measurement apparatus comprising:

- a sampling and measuring chamber (63) coupled to a sampling port (60) via a sample transfer line (61) for extracting the sample (103) having at least one of the gas phase (40) and the liquid phase (50) from the multiphase fluid mixture (13) flowing through the pipe section (21);
- a pressure regulation arrangement and a temperature regulation arrangement arranged to maintain the sample (103) from the sampling port (60) to the sampling and measuring chamber (63) at a pressure and a temperature substantially similar to the pressure and temperature of the multiphase fluid mixture (13) flowing through the pipe section (21); and
- a second fraction measurement device (66, 67) arranged to estimate a linear attenuation (LA) related to the at least one of the gas phase (40) and the liquid phase (50) extracted from the sample (103), said linear attenuation (LA) being used to correct the estimated representative fraction for the at least one of the gas phase (40) and the liquid phase (50) phase of the multiphase fluid mixture (13).

**FIG. 3**

**Description**

<u>TECHNICAL FIELD</u>

An aspect of the present invention relates to an apparatus for measuring a flow rate of a multiphase fluid mixture. Another aspect of the invention relates to a method for correcting flow rate measurement related to a multiphase fluid mixture. Such a multiphase flow meter and correction method may be used, in particular but not exclusively, in oilfield related applications, for example, to measure a flow rate of a hydrocarbon effluent flowing out of a geological formation into a well that has been drilled for the purpose of hydrocarbon exploration and production.

<u>BACKGROUND</u>

WO 99/10712 describes a flow rate measurement method adapted to oil effluents made up of multiphase fluid mixtures comprising water, oil, and gas. The effluent is passed through a Venturi in which the effluent is subjected to a pressure drop $\Delta P$, a mean value $<\Delta P>$ of the pressure drop is determined over a period $t_1$ corresponding to a frequency $f_1$ that is low relative to the frequency at which gas and liquid alternate in a slug flow regime, a means value $<pm>$ is determined for the density of the fluid mixture at the constriction of the Venturi over said period $t_1$, and a total mass flow rate value $<Q>$ is deduced for the period $t_1$ under consideration from the mean values of pressure drop and of density.

Such multiphase flow rate measurements are accurate when the flow mixture distribution is homogenous. A mixture is considered as homogenous when its several phases are mixed and dispersed enough to consider the behavior of the mixture as an equivalent to a single phase fluid having similar density and properties. Depending on where the multiphase flow meter is installed the incoming multiphase flow mixture is not necessary homogenous. In this case the common practice to homogenize the mixture is to use a flow conditioner upstream the multiphase flow meter. For example, the blind T is typically used as a flow conditioner in association with many multiphase flow meters. When the flow is homogenous the calculation of the flow rate based on the Bernoulli equation is relevant and accurate. It is to be noted that, generally, said calculation assumes that the flow rate of the multiphase fluid mixture is proportional to the pressure loss at the Venturi throat which is proportional to the acceleration of an equivalent single phase like fluid mixture through the Venturi throat.

Limitations on the accuracy may occur when a homogenous based flow modeling approach is applied when the amount of one or several phases of the mixture becomes very low. In particular, this may occur when the Gas Volume Fraction (GVF) in the measuring section becomes very high, for example up to 95%.

Further, in certain applications, multiphase flow meter measurements require mass attenuation and density data of the individual phases as an input to proceed with accurate estimation of the flow rates. Sensitivity to accuracy of mass attenuation measurements is one of the factors that limit the performance of multiphase flow meters especially at high gas volume fractions. Currently these data are determined through series of measurements that are time consuming and mostly manually operated, and result in a high level of error to the final result. This is especially true in case of a multiphase fluid mixture comprising gas condensate and/or wet gas. Typically, these data are obtained by flashing a sample from the pipe where the multiphase fluid mixture is flowing by means of a sampling bottle, subsequently performing various analysis of said sample in a laboratory, then inferring said data based on the analysis and providing said data to the processing arrangement of the multiphase flow meter and finally using said data in the evaluation of the flow rates. This is not satisfactory because the sample is often not representative of the multiphase fluid mixture flowing into the multiphase flow meter. This is due to the facts that some components are lost during the flashing process, the location where the sample is flashed is distant to the multiphase flow meter, and there is a substantial delay between the sampling instant and the flow rates evaluation based on the sample analysis results. This delay is not compatible with the compositional variation during time of the multiphase fluid mixture produced by the hydrocarbon reservoir.

<u>SUMMARY OF THE DISCLOSURE</u>

It is an object of at least one embodiment of the present invention to propose an apparatus and/or a method for measuring a flow rate of a multiphase fluid mixture that overcomes one or more of the limitations of the existing apparatus for measuring the flow rate of the multiphase fluid mixture, in particular improving the accuracy of the multiphase flow rates measurements and/or fraction measurement of one of the phases of the multiphase fluid mixture when the fluid flow composition is varying substantially over the time of the measurement operations.

The present invention proposes to measure in-situ and in near real time the fluid flow composition and other characteristic parameters of a specific fluid phase impacting the flow rates and/or representative fraction estimation. "in-situ" means that the measurements related to the specific fluid phase are performed at (or substantially close to) the main flow line conditions. These measurements are used to correctly calculate the flow rates of the individual phases performed by the multiphase flow meter. In a preferred embodiment, the invention proposes a reference measurement apparatus allowing in-situ gas phase related measurements without any flow interruption in the production tubing. In particular, the reference measurement apparatus enables obtaining a gas mass attenuation that is representative of the gas flowing through the multiphase flow meter.

According to one aspect, there is provided an apparatus for measuring a flow rate of a multiphase fluid mixture comprising at least one gas phase and one liquid phase, the apparatus comprising a multiphase flow meter comprising:

- a pipe section through which the multiphase fluid mixture flows comprising a measurement section;

- a fraction measurement device located in the measurement section estimating a representative fraction of at least one of the gas phase and the liquid phase of the multiphase fluid mixture passing at the measurement section; wherein the multiphase flow meter further comprises a reference measurement apparatus coupled to the multiphase flow meter for providing an in-situ composition measurement of an extracted sample, the reference measurement apparatus comprising:

- a sampling and measuring chamber coupled to a sampling port via a sample transfer line for extracting the sample having at least one of the gas phase and the liquid phase from the multiphase fluid mixture flowing through the pipe section;

- a pressure regulation arrangement and a temperature regulation arrangement arranged to maintain the sample from the sampling port to the sampling and measuring chamber at a pressure and a temperature substantially similar to the pressure and temperature of the multiphase fluid mixture flowing into the pipe section; and

- a second fraction measurement device arranged to estimate a linear attenuation related to the at least one of the gas phase and the liquid phase extracted from the sample, said linear attenuation being used to correct the estimated representative fraction for the at least one of the gas phase and the liquid phase of the multiphase fluid mixture.

The sampling port may be positioned at the measurement section or at a position in the pipe section such as to sample a phase of the multiphase flow mixture flowing according to conditions similar to the conditions expected at the measurement section.

The sampling port may be a scoop or an aerofoil probe.

The sampling and measuring chamber may comprise a filtering module for removing an undesirable phase from the sample.

The filtering module may comprise a filtering means chosen among the group comprising a metal mesh, a porous media, a diatomite material, a PTFE membrane, a Teflon AF membrane, a PDMS membrane, a zone of electrostatic fields, and a combination thereof.

The second fraction measurement device may be a gamma ray source facing a gamma detector coupled to the sampling and measuring chamber through nuclear windows.

The reference measurement apparatus may be further coupled to at least another additional sensor for performing physical and chemical measurements on the sample within the transfer line or within the sampling and measuring chamber.

The sampling and measuring chamber may comprise at least one pressure sensor and a sampling piston arranged to be operated so as to transfer the sample from the sampling port to the sampling and measuring chamber through the sample transfer line at a substantially constant pressure.

The sampling piston may comprise washing means for cleaning the windows facing the gamma ray source and detector.

The sample transfer line and the sampling and measuring chamber may be thermally insulated by means of respective encapsulation housings. The reference measurement apparatus may comprise a temperature regulation arrangement and at least one temperature sensor for maintaining the sample from the sampling port to the sampling and measuring chamber at a temperature substantially identical to the ones of the multiphase fluid mixture flowing into the pipe section.

The reference measurement apparatus may comprise a venting and flashing arrangement for expelling the sample out of the sampling and measuring chamber after a measurement cycle.

The apparatus may further comprise at least one control and data acquisition arrangement for calculating the linear attenuation related to the at least one of the gas phase and the liquid phase extracted from the sample and correcting the estimated representative fraction for the at least one of the gas phase and the liquid phase of the multiphase fluid mixture when a gas volume fraction GVF related the multiphase fluid mixture exceeds 90%.

The measurement section may be defined as a throat of the pipe section and is located between an upstream part and a downstream part such as to generate a pressure drop between the upstream part and the downstream part.

The multiphase flow meter may further comprise pressure tapings and pressure sensors for measuring the differential pressure of the multiphase fluid mixture between the upstream part and the throat and estimating a total flow rate of the multiphase fluid mixture.

The multiphase flow meter may be selected from the group consisting of: a Venturi, a V-cone, wedge, and an orifice plate type flow meter.

The pipe section may be connected at least on one end to a blind-T pipe section.

The multiphase fluid mixture may be a hydrocarbon effluent comprising gas, oil, and water.

According to another aspect, there is provided a method for measuring a flow rate of a multiphase fluid mixture comprising at least one gas phase and one liquid phase, the flow rate measuring method comprising:

- flowing the multiphase fluid mixture in a pipe section having a measurement section;

- submitting the multiphase fluid mixture to gamma rays, measuring an absorption of the gamma rays by at least one of the gas phase and the liquid phase of the multiphase fluid mixture passing at the measurement section and estimating a representative fraction for at least one of the gas phase and the liquid phase;
  wherein the flow rate measuring method further comprises:

- extracting a sample having at least one of the gas phase and the liquid phase from the multiphase fluid mixture flowing through the pipe section by means of a sampling port and transferring said sample to a sampling and measuring chamber via a sample transfer line;

- regulating a pressure and a temperature to maintain the sample from the sampling port to the sampling and measuring chamber at a pressure and a temperature substantially similar to the pressure and temperature of the multiphase fluid mixture flowing through the pipe section;

- submitting the sample to gamma rays, measuring an absorption of the gamma rays by the at least one of the gas phase and the liquid phase extracted from the sample in the sampling and measuring chamber and estimating a linear attenuation related to the at least one of the gas phase and the liquid phase extracted from the sample; and

- correcting the estimated representative fraction for the at least one of the gas phase and the liquid phase of the multiphase fluid mixture based on said linear attenuation.

The method may further comprise the step of filtering the sample for removing an undesirable phase.

Additional physical and chemical measurements may be performed on the sample within the transfer line or within the sampling and measuring chamber.

The method may further comprise measuring the differential pressure of the multiphase fluid mixture between the upstream and downstream parts and estimating a total flow rate of the multiphase fluid mixture.

With the invention, the reference measurement apparatus can quasi-continuously or periodically measure and calculate the mass attenuation coefficients of the gas phase for a gas condensate / wet gas fluid. As its temperature and pressure are kept similar to the ones of the multiphase flow meter, the estimated gas mass attenuation coefficient of the gas phase used to determine the individual phase flow rates by means of the multiphase flow meter are representative of the multiphase fluid mixture. Thus, the apparatus for measuring the flow rate of the multiphase fluid mixture of the invention enables improving the measurement accuracy of the multiphase flow meter.

The apparatus for measuring the flow rate of the multiphase fluid mixture of the invention offers the ability to perform in-situ measurements with long duration and good quality without interrupting the production of hydrocarbon.

Other advantages will become apparent from the hereinafter description of the present invention.

BRIEF DESCRIPTION OF THE DRAWINGS

The present invention is illustrated by way of examples and not limited to the accompanying drawings, in which like references indicate similar elements:

• Figure 1 schematically shows an onshore hydrocarbon well location illustrating an application example of an apparatus for measuring the flow rate of a multiphase fluid mixture of the invention;

• Figure 2 schematically illustrates the principle of determining the flow rates of the multiphase flow mixture;

• Figure 3 is a cross-section view schematically illustrating an embodiment of the apparatus for measuring the flow rate of the multiphase fluid mixture of the invention in a situation of high gas volume fraction GVF;

- Figure 4 is a top cross-section view schematically illustrating the throat of a Venturi flow meter according to an embodiment of the invention;

- Figure 5 is a top cross-section view schematically illustrating the throat of a Venturi flow meter according to another embodiment of the invention; and

- Figure 6 schematically illustrates the method for correcting flow rate measurements of the invention.

DETAILED DESCRIPTION

In the following description, the terminology "multiphase fluid mixture" has a broad meaning. It may be a mixture comprising multiple phases, for example oil, gas and water. It may also be a mixture comprising a single phase in specific conditions, resulting in a separation between the components constituting said phase, for example in conditions above the bubble point, or in non-isobaric or/and non-isothermal conditions. In such conditions, the single phase becomes biphasic and drops heavy components.

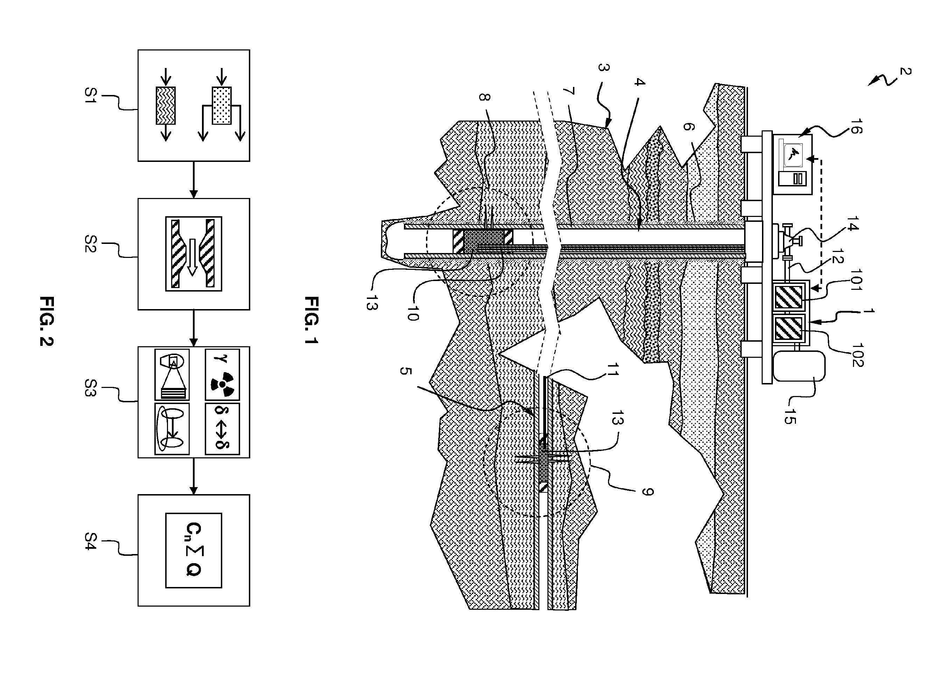

FIG. 1 schematically shows an onshore hydrocarbon well location and equipments 2 above a hydrocarbon geological formation 3 after drilling operation has been carried out, after a drill pipe has been run, and eventually, after cementing, completion and perforation operations have been carried out, and exploitation has begun. The well is beginning producing hydrocarbon, e.g. oil and/or gas. At this stage, the well bore comprises substantially vertical portion 4 and may also comprise horizontal or deviated portion 5. The well bore 4 is either an uncased borehole, or a cased borehole, or a mix of uncased and cased portions.

The cased borehole portion comprises an annulus 6 and a casing 7. The annulus 6 may be filled with cement or an open-hole completion material, for example gravel pack. Downhole, a first 8 and second 9 producing sections of the well typically comprises perforations, production packers and production tubings 10, 11 at a depth corresponding to a reservoir, namely hydrocarbon-bearing zones of the hydrocarbon geological formation 3. A fluid mixture 13 flows out of said zones 8, 9 of the hydrocarbon geological formation 3. The fluid mixture 13 is a multiphase hydrocarbon fluid mixture comprising a plurality of fluid fractions (water, oil, gas) and a plurality of constituting elements (water, various hydrocarbon molecules, various molecules solved in water). The fluid mixture 13 flows downhole through the production tubings 10, 11 and out of the well from a well head 14. The well head 14 is coupled to surface production arrangement 15 by a surface flow line 12. The surface production arrangement 15 may typically comprise a chain of elements connected together, e.g. a pressure reducer, a heat exchanger, a pumping arrangement, a separator, a tank, a burner, etc... (not shown in details). In one embodiment, one or more apparatus 1 for measuring the flow rate of the multiphase fluid mixture may be installed within the surface flow line 12 or connected to the surface flow line 12.

The apparatus 1 for measuring the flow rate of the multiphase fluid mixture may be installed in a skid.

A control and data acquisition arrangement 16 is coupled to the apparatus 1 for measuring the flow rate of the multiphase fluid mixture of the invention, and/or to other downhole sensors (not shown) and/or to active completion devices like valves (not shown). The control and data acquisition arrangement 16 may be positioned at the surface. The control and data acquisition arrangement 16 may comprise a computer. It may also comprise a satellite link (not shown) to transmit data to a client's office. It may be managed by an operator.

The precise design of the down-hole producing arrangement and surface production/control arrangement is not germane to the present invention, and thus these arrangements are not described in detail herein.

Figure 2 schematically illustrates the principle of determining the flow rate of the multiphase fluid mixture. In a first step S1, the stream of the multiphase flow mixture is pre-conditioned. In a second step S2, the multiphase flow mixture is passed through a Venturi and differential pressure is measured. In a third step S3, other measurements are performed to determine parameters characterizing each individual phases (liquid hydrocarbon/oil, water, gas). In a fourth step S4, the total flow rate, the flow rates of each individual phase are calculated based on said measurements, said parameters and also a fluid model, and taking into consideration some correction factor related to the composition of the multiphase fluid mixture flowing out of the producing sections of the well.

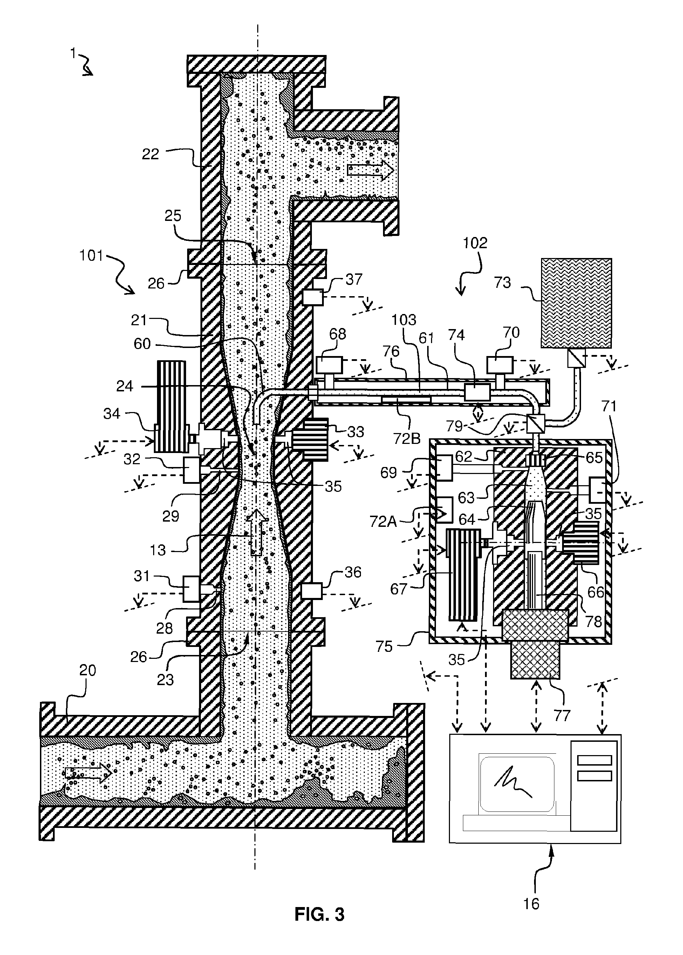

Figure 3 is a cross-section view schematically illustrating an embodiment of the apparatus 1 for measuring the flow rate of the multiphase fluid mixture of the invention. The apparatus 1 comprises a multiphase flow meter 101 coupled to a reference measurement apparatus 102. The multiphase flow meter 101 measures the flow rates of a commingled flow of different phases 13, e.g. gas, oil and water, without separating the phases. The reference measurement apparatus 102 performs additional measurements, in particular on the gas phase. Such an apparatus combining the multiphase flow meter and the reference measurement apparatus is particularly advantageous to implement correction on flow rate measurement when the amount of one or several phases of the mixture becomes very low, in particular, when the Gas Volume Fraction GVF in the multiphase flow meter 101 becomes very high, for example up to 95%.

The multiphase flow meter 101 comprises a pipe section 21 which internal diameter gradually decreases from an upstream part 23 to a throat 24, forming a convergent Venturi, then gradually increases from the throat 24 to a downstream part 25. The convergent Venturi induces a pressure drop between the upstream part 23 and the downstream part 25 encompassing the throat 24. The portion of the pipe around the Venturi throat 24 constitutes the measuring section. The pipe section 21 can be coupled to any flowing line 12 by any appropriate connection arrangement, for example a flange 26 having a bolt-hole pattern and a gasket profile (not shown in details). The multiphase fluid mixture 13 flows through the upstream part 23, the throat 24 and the downstream part 25 of the pipe section 21 as indicated by the arrow.

Further, optionally, the pipe section 21 may be coupled to a first flow conditioner under the form of a blind T pipe section 20 at the upstream part 23. The measuring apparatus may also be coupled to a second blind T pipe section 22 at the downstream part 25. The first blind T pipe section enables achieving proper homogenization of the mixture coming at the inlet of the pipe section 21 of the multiphase flow meter 101. The second blind T pipe section 22 has no role in conditioning the flow mixture in the multiphase flow meter. The various pipe sections 20, 21, 22 may be coupled together by the above mentioned flange 26. This is an example as any other connecting means known in the art may also be satisfactorily used.

Furthermore, the multiphase flow meter 101 comprises various sensing arrangements to measure various characteristic values of the multiphase fluid mixture 13 flowing into the pipe section 21.

In an embodiment, the sensing arrangement is a Venturi flow meter estimating a total flow rate of the multiphase fluid mixture based on differential pressure measurement. The pipe section 21 is provided with pressure tappings 28, 29. A first pressure tapping 28 is positioned in the upstream part 23. A first pressure sensor 31 is associated with the first pressure tapping 28 for measuring the pressure of the multiphase fluid mixture 13 flowing in the upstream part 23. A second pressure tapping 29 is positioned at the throat 24. A second pressure sensor 32 is associated with the second pressure tapping 29 for measuring the pressure of the multiphase fluid mixture 13 flowing at the throat 24. Thus, the pressure drop of the multiphase fluid mixture between the upstream part and the throat due to the convergent Venturi can be measured.

In another embodiment, the sensing arrangement is a fraction measurement device, for example a gamma densitometer comprising a gamma ray source 33 and a gamma ray detector 34. The gamma densitometer measures absorption of the gamma rays by each phase of the multiphase fluid mixture and estimates a density of the multiphase fluid mixture 13 and a fractional flow rate for each phase. The gamma ray source 33 and the gamma ray detector 34 are diametrically positioned on each opposite sides of the throat 24 or closed to the throat.

The gamma ray source 33 may be a radioisotope Barium 133 source. Such a gamma ray source 33 generates photons which energies are distributed in a spectrum with several peaks. The main peaks have three different energy levels, namely 32 keV, 81 keV and 356 keV. As another example, a known X-Ray tube may be used as a gamma ray source 33.

The gamma ray detector 34 comprises a scintillator crystal (e.g. NaITI) and a photomultiplier. The gamma ray detector 34 measures the count rates (the numbers of photons detected) in the various energy windows corresponding to the attenuated gamma rays having passed through the multiphase fluid mixture 13 at the throat. More precisely, the count rates are measured in the energy windows that are associated to the peaks in the energy spectrum of the gamma photons at 32 keV, 81 keV and 356 keV.

The gamma ray source 33 and the gamma ray detector 34 are coupled to the pipe section 21 through appropriate windows 35 sealed against the pipe section. In particular, the windows 35 are transparent to the gamma rays in the energy spectrum used by the source and the associated detector.

The count rates measurements in the energy windows at 32 keV and 81 keV are mainly sensitive to the fluid fractions of fluid mixture and the constituting elements (composition) due to the photoelectric and Compton effects at these energies. The count rates measurements in the energy window at 356°keV are substantially sensitive to the density of the constituting elements due to the Compton effect only at this energy. Based on these attenuation measurements and calibration measurements, the fractional flow rate for each phase and the density of the multiphase fluid mixture 13 can be estimated. Such an estimation has been described in details in several documents, in particular WO 02/50522 and will not be further described in details herein.

As an alternative to the gamma densitometer, other fraction measurement device may be used like for example microwave based fraction measurement device.

The multiphase flow meter 101 may also comprise at least one temperature sensor 36, 37 for measuring the temperature of the multiphase fluid mixture 13.

In another embodiment, both sensing arrangements hereinbefore presented may be combined to estimate the total flow rate of the multiphase fluid mixture, the density of the multiphase fluid mixture and the fractional flow rate for each phase of the multiphase fluid mixture.

Temperature sensors 36, 37 may be installed or inserted on the external side of the wall of the pipe section 21 of the multiphase flow meter 101 at different locations, for example close to the upstream part 23, and/or the throat 24, and/or the downstream part 25, respectively. The temperature sensor may be screwed or strapped on the external side of the wall of the pipe section. Any other position of the sensor in a zone of the pipe section where the multiphase fluid mixture flows according to flow conditions similar to the ones expected at the Venturi throat may be convenient, provided that the positioning of the temperature sensors does not affect the positioning of the other sensors, the tightness and the overall design of the multiphase flow meter 101.

The reference measurement apparatus 102 is coupled to the multiphase flow meter 101. The reference measurement apparatus 102 is positioned closely to the multiphase flow meter 101 in order to maintain similar conditions of pressure and temperature between both apparatuses. Limiting the variation of pressure and temperature between the multiphase fluid mixture flowing into the main stream and the individual phase sample avoids variation in density. Thus, phases samples can be obtained from the production tubing. As a consequence, the measurements related to the individual phase sample are made according to conditions that are coherent with the multiphase fluid mixture conditions and can be used to improve the accuracy of the multiphase flow meter measurements. Further, the reference measurement apparatus can also obtain physical and chemical measurements related to the sample that can be used to assess the reservoir and production facilities.

The reference measurement apparatus 102 comprises a sampling port 60, a sample transfer line 61, a body 62 defining a sampling and measuring chamber 63 that receives a sampling piston 64, a filtering module 65, a gamma ray source 66 and a gamma ray detector 67, various pressure sensors 68, 69, various temperature sensors 70, 71, a temperature regulation arrangement 72, a venting and flashing arrangement 73, and additional sensors 74, and encapsulation housing 75, 76.

In an upstream to a downstream order, the sampling port 60 is coupled by means of the sample transfer line 61 and the filtering module 65 to the sampling and measuring chamber 63. The sampling and measuring chamber 63 is further coupled to the venting and flashing arrangement 73.

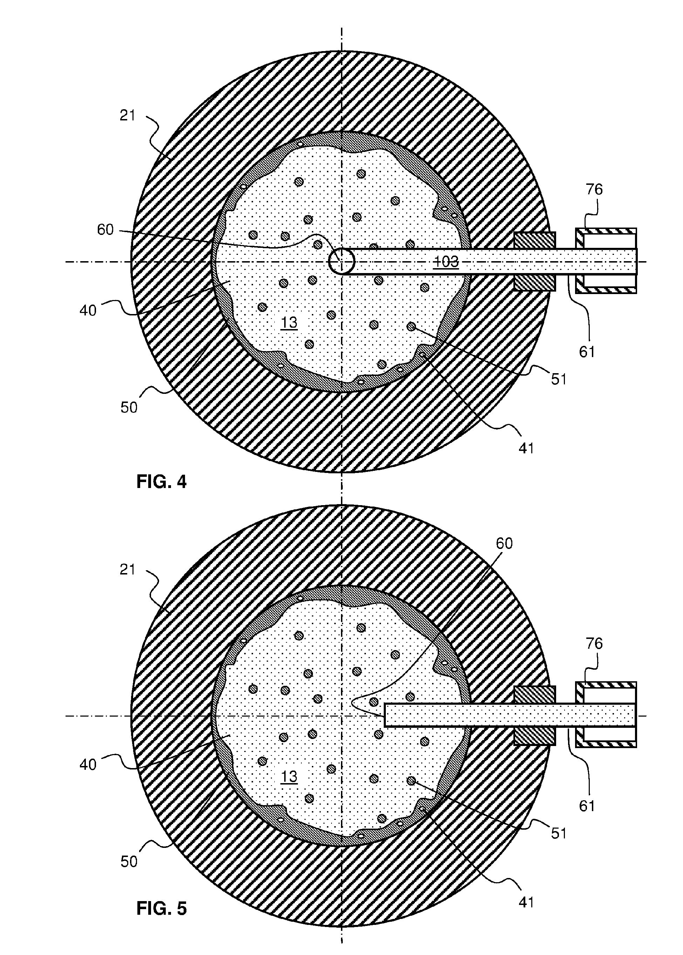

The sampling port 60 takes a sample 103 of the required phase, e.g. the gas phase in the preferred embodiment, from the multiphase stream 13. Figures 4 and 5 are top cross-section views schematically illustrating the throat of the Venturi flow meter fitted with the sampling port 60. In these particular embodiments, the sampling port 60 end is positioned at the throat immediately after the windows 35 of the gamma ray source/detector, substantially at the center of the throat in the cross-section plane. Alternatively, the sampling port 60 can be positioned after the throat, in the downstream part 25. Indeed, the sampling port can be positioned at any location within the pipe section 21 provided that it is positioned in a zone of the pipe where the multiphase fluid mixture flows according to flow conditions similar to the ones expected at the Venturi throat and provided it does not affect the positioning of the other sensors or interfere with said sensors measurements, in particular the gamma ray source/detector and the pressure tappings of the multiphase flow meter 101. In the particular embodiment depicted in Figure 4, the sampling port 60 may be a scoop like port or an aerofoil probe designed so as to mitigate the vortex induced within the measuring section of the multiphase flow meter 101. It may have a cylindrical cross-section adapted for coupling with the sample transfer line 61. In the particular depicted in Figure 5, the sampling port 60 may be tubing of cylindrical cross section with a sampling hole oriented perpendicular to the multiphase fluid mixture stream.

The sample transfer line 61 couples the sampling port 60 to the body 62 defining the sampling and measuring chamber 63. The sample transfer line 61 may be coupled to the body 62 through a valve 79. As an example, the sample transfer line 61 is a tube having a diameter of 10 mm.

The sampling and measuring chamber 63 is a defined volume where the sample is delivered to proceed with the measurements.

The sampling piston 64 is coupled to a motor 77 through a shaft 78. When operated, the sampling piston 64 provides a suction effect to fill the sampling and measuring chamber 63 that allows acquiring a sample in a reasonable period of time. The sampling piston 64 is operated in such a manner that the pressure difference between the main multiphase stream and the sample within the sampling and measuring chamber does not exceed a threshold differential pressure, for example 1,4bar (20 psi). Operating the sampling piston through a shaft and a motor is an example as any other actuator for displacing the piston within the chamber would be satisfactory.

The sampling piston 64 may also comprise means for removing the eventual liquid film present on the wall of the sampling and measuring chamber 63 and in particular on the nuclear windows. As examples, said film removing means may be washers or o-rings (not depicted in Figure 3). This avoids the detrimental effect on the measurements accuracy. Alternatively, the nuclear windows may be coated with a hydrophobic coating.

The filtering module 65 may comprise a filter for removing the undesirable phases from the sample, in particular it forms a liquid trap removing liquid droplets in suspension within the gas sample. As examples, the filter may comprise a porous media, a filter made of diatomite, a filter creating a zone of electrostatic fields, a filter comprising PTFE, Teflon AF, or PDMS membranes, or a combination of the hereinbefore mentioned filtering means. The filtering module 65 may further comprise a metal mesh (e.g. Inconel mesh). The filtering module has a volume sufficient for multiple sampling, measurement and flushing cycle. The clogging of the filtering module may be controlled either by measuring the variation over time of the differential pressure between the pressure sensors 68 (measuring the pressure of the sample within the transfer line) and 69 (measuring the pressure of the sample flowing into the sampling and measuring chamber), or by fitting a capacitance sensor within the filtering module (not shown). When a clogging of the filtering module 65 is detected, the liquid trapped within the filtering means can be flushed through the sample transfer line and the sampling port by injecting an inert gas (e.g. Nitrogen) into the sampling and measuring chamber and operating the piston to flush said gas from the sampling and measuring chamber.

The gamma ray source 66 and the gamma ray detector 67 are similar to the gamma ray source 33 and the gamma ray detector 34 described in relation with the hereinbefore described multiphase flow meter 101, respectively.

The various pressure 68, 69 and temperature 70, 71 sensors enables controlling the parameters within the measurement apparatus 102 and correcting the PVT properties of the sample. In order to control the error in density of sampled phase, the temperature sensors accuracy may be for example 0.2°C and the pressure sensors accuracy may be for example 70mbar (1 psi).

The temperature regulation arrangement 72 together with the encapsulation housing 75, 76 form a thermal management arrangement. The encapsulation housing 75, 76 are forming thermal insulating envelopes, for example of cylindrical shape. A first encapsulation housing 75 is encapsulating the body 62 defining the sampling and measuring chamber 63 together with the sampling piston 64, and the gamma ray source 66 and the gamma ray detector 67. A second encapsulation housing 76 is encapsulating the sample transfer line and eventually the additional sensors 74. The second encapsulation housing 76 enables avoiding any cold spots where the sample 103 could potentially condense when flowing through the sample transfer line 61. The temperature regulation arrangement 72 comprises active heating and cooling elements, a first heating and cooling element 72A associated with the first encapsulation housing 75, and a second heating and cooling element 72B associated with the second encapsulation housing 76. Typically, in oilfield applications, the temperature regulation arrangement is arranged to accommodate temperature varying from e.g. -40°C to +150°C. Thus, taking into consideration that the overall apparatus is a bulky entity of e.g. 200 kg, the heating and cooling element has a power of several kilowatts. The temperature regulation arrangement enables providing a temperature stabilization of the reference measurement apparatus 102 in a range of $\pm 1$ °C based on the measurements made by the different temperature sensors 36, 37 within the multiphase flow meter 101 and 70, 71 within the reference measurement apparatus 102. In particular, the temperature regulation arrangement operates the heating and cooling elements in an appropriate manner so as to establish a temperature of the sample 103 substantially equal (e.g. $\pm 1$°C) to the temperature of the multiphase fluid mixture 13. This minimizes the temperature variation between the multiphase stream temperature and the sample temperature within a range of $\pm 5$°C. Thus, the phase sample is representative of the same phase in the multiphase stream and can be accurately analyzed.

The venting and flashing arrangement 73 enables discarding the sample from the sampling and measuring chamber 63 once analyzed. The venting and flashing arrangement 73 may be coupled to the sampling and measuring chamber 63 via the valve 79 and an appropriate drain pipe. The sample may be either flushed back to the main flow line, or discarded into sampling container (e.g. sampling bottle) for further laboratory analysis (physical-chemical analysis like e.g. gas chromatography, mass spectrometry, ion mobility spectrometry, density and viscosity measurements, etc...). This enables a minimal level of contamination of the sample.

The additional sensor(s) 74 may be either at least one sensor providing a set of quality indicators for controlling the performance of the reference measurement apparatus 102, or at least one sensor for the physical-chemical analysis of the sample. In this latter case (not shown), the sensor(s) may be positioned within the body 62 for analyzing the sample within the sampling and measuring chamber 63. The additional sensor may also comprise an electromagnetic sensor (not shown) to detect the presence of condensation and to measure the thickness of the liquid film on the walls of, as an example, the sampling and measuring chamber 63. As examples, the additional sensors may be electromagnetic sensors performing conductivity or capacitance measurements, optical sensors performing fluorescence, refraction, or absorption measurements, gas chromatography, ion-mobility spectrometry, mass-spectrometry, density and viscosity measurements related to the sample.

It is to be noted that, though, the pressure tappings 28, 29, the pressure sensors 31, 32, the gamma ray source 33 and detector 34, the temperature sensors 36, 37 of the multiphase flow meter 101, and the sample transfer line 76, the gamma ray source 66 and detector 67, the pressure sensors 68, 69, the temperature sensors 70, 71, the temperature regulation arrangement 72, the additional sensors 74, the valve 79, the piston motor 77 of the reference measurement apparatus 102 have been depicted in the same longitudinal plane in Figure 3 (i.e. the plane of the cross-section view), this is only for a mere drawing simplicity reason. It may be apparent for the skilled person that said entities may be positioned in different longitudinal planes. Further, it may also be apparent for the skilled person that the position and orientation of the reference measurement apparatus relatively to the multiphase flow meter, in particular the part comprising the sampling and measuring chamber below the sample transfer line as depicted in Figure 3 is a mere example. This position and orientation can be changed such that said part is, for example, positioned above, or in line with, or inclined relatively to the sample transfer line or relatively to the multiphase flow meter.

The pressure sensors 31, 32, the gamma ray source 33 and detector 34, the temperature sensor 36, 37 of the multiphase flow meter 101, and the gamma ray source 66 and detector 67, the pressure sensors 68, 69, the temperature sensors 70, 71, the temperature regulation arrangement 72, the additional sensors 74, the valve 79, the piston motor 77 of the reference measurement apparatus 102 are coupled to the control and data acquisition arrangement 16. An interface (not shown) may be connected between said various entities and the control and data acquisition arrangement 16. Such an interface may comprise an analog-to-digital converter means, multiplexing means, wired or wireless communication means and electrical power means. It is to be noted that most of the connections (dotted lines) between the entities and the control and data acquisition arrangement 16 have not been completely depicted for a mere drawing clarity reason.

The control and data acquisition arrangement 16 may determine the total flowrate, the flow rates of the individual phases of the multiphase fluid mixture, the density of the multiphase fluid mixture, the temperature and other values based on the measurements provided by the various sensors and detectors.

In an embodiment (as depicted in the drawings), a single control and data acquisition arrangement is associated with the multiphase flow meter 101 and the reference measurement apparatus 102. In another embodiment (not shown) the multiphase flow meter 101 and the reference measurement apparatus 102 are associated with distinct control and data acquisition arrangements. In this other embodiment, the main control and data acquisition arrangement may be the one associated with the multiphase flow meter 101. The control and data acquisition arrangement associated with the reference measurement apparatus 102 acquires the raw signal from the detectors, implements a linearization algorithm to correct the statistical fluctuations, determine the gas mass attenuation coefficient and transmit the result to the main control and data acquisition arrangement associated with multiphase flow meter 101.

Both Figures 3 and 4 schematically illustrate a situation of high gas volume fraction GVF. In such a situation, a main wet gas stream 40 with droplets of oil and water 51 flows in the core of the pipe section 21, while a film of liquid comprising oil and water 50 with bubbles of gas 41 flows along the wall of the pipe section 21. At high gas volume fraction GVF the accuracy of the gamma densitometer (gamma ray source and detector) can dramatically decrease. A high gas volume fraction GVF of the multiphase fluid mixture is considered to be at least 90%.

Knowing the characteristic parameters of the gas phase by taking a sample of the gas phase and measuring its properties by means of the reference measurement apparatus, it is possible to correctly evaluate the liquid fraction and the gas fraction with the measurement made by the gamma densitometer of the multiphase flow meter 101.

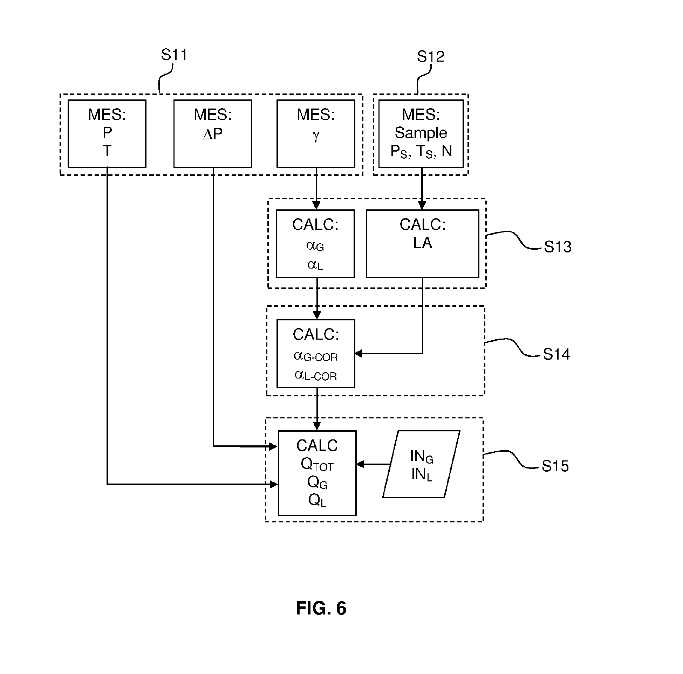

Figure 6 schematically illustrates the method of the invention for obtaining accurate flow rate measurements. The method uses the measurements of the reference measurement apparatus 102 combined with the measurements of the multiphase flow meter 101 in order to overcome the limitations of the prior art and substantially improve the performance of the multiphase flow meter. In particular, the near real-time mass attenuation measurements of the formation gas sample at line conditions constitutes reference data that are transferred to the control and data acquisition arrangement allowing to reflect the present composition of the fluid mixture produced by the hydrocarbon reservoir and currently flowing though the multiphase flow meter 101.

In a first step S11, various measurements are performed as explained in details hereinbefore in relation with Figure 3, namely:

- differential pressure $\Delta$P measurements;
- gamma attenuation $\gamma$ measurements; and
- pressure P and temperature T measurements.

In a second step S12, a sample of the required gas phase is transferred into the reference measurement apparatus while maintaining the gas sample at line conditions. The reference measurement apparatus measures the mass attenuation of the gas phase, and may combine this measurement with additional physical-chemical analysis. The additional physical-chemical analysis provides comprehensive evaluation of the fluids flowing out of the reservoir.

The reference measurement apparatus is operated as follow. Firstly a defined quantity of the required phase (e.g. gas in the preferred embodiment described) is extracted from the multiphase stream by the probe. Then, under the operation of the sampling piston, the sample flows through the sample transfer line, then through the filtering module, and is accumulated into the sampling and measuring chamber. After operation of the piston, the sample within the sampling and measuring chamber is analyzed by means of the gamma ray source and the gamma ray detector. The gamma attenuation $\gamma_s$ measurements are performed. Other analysis may be performed in-situ or at a later stage. Finally, the sample is discarded, for example in a sample bottle for further and later laboratory analysis. Others parameters, like the temperature and the pressure at different place of the reference measurement apparatus are measured, in particular the temperature $T_s$ and pressure $P_s$ of the sample within the sampling and measuring chamber. The operation of the temperature regulation arrangement and of the piston and valve enables performing a fine temperature and pressure regulation. Advantageously, the measurements are performed according to conditions similar to the conditions within the main multiphase stream by means of the temperature regulation arrangement. The control and data acquisition arrangement receives the raw data from the gamma ray detector, the temperature sensor and the pressure sensor of the reference measurement apparatus.

In a third step S13, two series of calculation are performed. Firstly, the gas fraction $\alpha_G$ and the liquid fraction $\alpha_L$ can be calculated from the attenuation measurements of the gamma densitometer of the multiphase flow meter 101. Secondly, the control and data acquisition arrangement applies a linearization algorithm to account for the presence of Poisson noise and determine the linear attenuation LA from the reference measurements on the gas sample. The linear attenuation LA is the product of the mass attenuation $\mu$ and the density p of the concerned phase, e.g. gas phase. The linear attenuation LA related to the gas phase can be updated either at regular intervals, or when conditions in the production tubing change. The control and data acquisition arrangement of the reference measurement apparatus is in direct communication with the control and data acquisition arrangement of the multiphase flow meter, and communicates newly estimated linear attenuation LA related to the gas.

The measured gas mass attenuation is found from the following relation:

$$\mu_G = -\ln\left(\frac{N}{N_0}\right) \cdot \frac{1}{\rho_G \cdot d} \qquad (1)$$

where :

- $\mu_G$ (m2/kg) is the mass attenuation related to the gas phase;

- No (count per second) is the gamma ray intensity measured by the detector when the sampling and measuring chamber is empty;

- N (count per second) is the gamma ray intensity measured by the detector when the sample is in the sampling and measuring chamber;

- $\rho_G$ (kg/m3) is the mass density of the gas phase; and

- d (m) is the sampling and measuring chamber diameter.

Thus, the measured linear attenuation is found from the following relation:

$$LA = -\ln\left(\frac{N}{N_0}\right) \cdot \frac{1}{d} \qquad (2)$$

In a fourth step S14, the calculated gas fraction $\alpha_G$ and the liquid fraction $\alpha_L$ can be corrected based on the linear attenuation LA related to the gas. Corrected gas fraction $\alpha_{G\text{-}coR}$ and liquid fraction $\alpha_{L\text{-}coR}$ are calculated.

In a fifth step S15, the total flow rate $Q_{TOT}$, the flow rate of the gas phase $Q_G$ and the flow rate of the liquid phase $Q_L$ can be calculated based on the differential pressure $\Delta P$ measurements and the corrected gas fraction $\alpha_{G\text{-}coR}$ and the liquid fraction $\alpha_{L\text{-}coR}$, respectively. Thus, the performance of the multiphase flow meter 101 can be improved. This calculation may also take into consideration fluid properties related to the gas $IN_G$ or the liquid $IN_L$ inputs known or obtained from calibration of the measuring apparatus, and/or effect of actual pressure P and temperature T conditions of the multiphase fluid mixture during the measurements. Such data may also be provided from time to time by the laboratory analysis on the discarded samples.

The implementation of in-situ reference measurement of the gas phase significantly improves the accuracy of flow rates metering especially in the case of high gas volume fraction and also when the multiphase fluid mixture composition is varying substantially over the time of operations.

It should be appreciated that embodiments of the present invention are not limited to onshore hydrocarbon wells and can also be used offshore or in subsea applications. Furthermore, although some embodiments have drawings showing a horizontal well bore and a vertical well bore, said embodiments may also apply to a deviated well bore. All the embodiments of the present invention are equally applicable to cased and uncased borehole (open hole). Although particular applications of the present invention relate to the oilfield industry, other applications to other industry, for example the mining industry or the like also apply. The apparatus of the invention is applicable to various hydrocarbon exploration and production related applications, for example permanent well monitoring applications wherein several measuring apparatuses are positioned at various locations in the field.

Though, the present invention is described in conjunction with a Venturi flow meter, what is important is the generation of a pressure drop when the multiphase fluid mixture flows through the multiphase flow meter. This could also be obtained with a V-cone, or orifice plate type flow meter.

Though, the present apparatus and method primarily focus on the gas phase analysis as a preferred embodiment, it may be adapted to focus on the liquid phase analysis.

Though, the drawings depict the multiphase flow meter 101 and the reference measurement apparatus 102 installed in two separate skids, they could also be installed on the same skid or pad.

The drawings and their description hereinbefore illustrate rather than limit the present invention.

Although a drawing shows different functional entities as different blocks, this by no means excludes implementations in which a single entity carries out several functions, or in which several entities carry out a single function. In this respect, the drawings are very diagrammatic.

Any reference sign in a claim should not be construed as limiting the claim. The word "comprising" does not exclude the presence of other elements than those listed in a claim. The word "a" or "an" preceding an element does not exclude the presence of a plurality of such element.

**Claims**

1. An apparatus (1) for measuring a flow rate of a multiphase fluid mixture (13) comprising at least one gas phase (40) and one liquid phase (50), the apparatus comprising a multiphase flow meter (101) comprising:

   - a pipe section (21) through which the multiphase fluid mixture (13) flows comprising a measurement section (24);
   - a fraction measurement device (33, 34) located in the measurement section (24) estimating a representative fraction of at least one of the gas phase (40) and the liquid phase (50) of the multiphase fluid mixture (13) passing at the measurement section (24);
   wherein the multiphase flow meter (101) further comprises a reference measurement apparatus (102) coupled to the multiphase flow meter (101) for providing an in-situ composition measurement of an extracted sample (103), the reference measurement apparatus comprising:
   - a sampling and measuring chamber (63) coupled to a sampling port (60) via a sample transfer line (61) for extracting the sample (103) having at least one of the gas phase (40) and the liquid phase (50) from the multiphase fluid mixture (13) flowing through the pipe section (21);
   - a pressure regulation arrangement and a temperature regulation arrangement arranged to maintain the sample (103) from the sampling port (60) to the sampling and measuring chamber (63) at a pressure and a temperature substantially similar to the pressure and temperature of the multiphase fluid mixture (13) flowing through the pipe section (21); and
   - a second fraction measurement device (66, 67) arranged to estimate a linear attenuation (LA) related to the at least one of the gas phase (40) and the liquid phase (50) extracted from the sample (103), said linear attenuation (LA) being used to correct the estimated representative fraction for the at least one of the gas phase (40) and the liquid phase (50) phase of the multiphase fluid mixture (13).

2. The apparatus according to claim 1, wherein the sampling port (60) is positioned at the measurement section (24).

3. The apparatus according to claim 1, wherein the sampling port (60) is positioned at a position in the pipe section such as to sample a phase of the multiphase flow mixture (13) flowing according to conditions similar to the conditions expected at the measurement section (24).

4. The apparatus according to anyone of the claims 1 to 3, wherein the sampling and measuring chamber (63) comprises a filtering module (65) for removing an undesirable phase from the sample (103).

5. The apparatus according to claim 4, wherein the filtering module (65) comprises a filtering means chosen among the group comprising a metal mesh, a porous media, a diatomite material, a PTFE membrane, a Teflon AF membrane, a PDMS membrane, a zone of electrostatic fields, and a combination thereof.

6. The apparatus according to anyone of the claims 1 to 5, wherein the second fraction measurement device is a gamma ray source (66) facing a gamma detector (67) coupled to the sampling and measuring chamber (63) through nuclear windows (35).

7. The apparatus according to anyone of the claims 1 to 6, wherein the reference measurement apparatus (102) is further coupled to at least another additional sensor (74) for performing physical and chemical measurements on the sample (103) within the transfer line (61) or within the sampling and measuring chamber (63).

8. The apparatus according to anyone of the claims 1 to 7, wherein the sampling and measuring chamber (63) comprises at least one pressure sensor (68, 69) and a sampling piston (64) arranged to be operated so as to transfer the sample (103) from the sampling port (60) to the sampling and measuring chamber (63) through the sample transfer line (61) at a substantially constant pressure.

9. The apparatus according to anyone of the claims 1 to 8, wherein the sample transfer line (61) and the sampling and measuring chamber (63) are thermally insulated by means of respective encapsulation housings (75, 76), and wherein the reference measurement apparatus (102) further comprises a temperature regulation arrangement (72) and at least one temperature sensor (70, 71) for maintaining the sample (103) from the sampling port (60) to the sampling and measuring chamber (63) at a temperature substantially identical to the ones of the multiphase fluid mixture (13) flowing into the pipe section (21).

10. The apparatus according to anyone of the claims 1 to 9, further comprising at least one control and data acquisition arrangement (16) for calculating the linear attenuation (LA) related to the at least one of the gas phase (40) and the liquid phase (50) extracted from the sample (103) and correcting the estimated representative fraction for the at least one of the gas phase (40) and the liquid phase (50) phase of the multiphase fluid mixture (13) when a gas volume fraction GVF related the multiphase fluid mixture exceeds 90%.

11. The apparatus according to anyone of the claims 1 to 10, wherein the measurement section (24) is defined as a throat of the pipe section (21) and is located between an upstream part (23) and a downstream part (25) such as to generate a pressure drop between the upstream part (23) and the downstream part (25); and wherein the multiphase flow meter (101) further comprises pressure tapings (28, 29) and pressure sensors (31, 32) for measuring the differential pressure of the multiphase fluid mixture (13) between the upstream part (23) and the throat (24) and estimating a total flow rate of the multiphase fluid mixture (13).

12. The apparatus according to anyone of the claims 1 to 11, wherein the multiphase fluid mixture (13) is a hydrocarbon effluent comprising gas, oil, and water.

13. A method for measuring a flow rate of a multiphase fluid mixture (13) comprising at least one gas phase (40) and one liquid phase (50), the flow rate measuring method comprising:

- flowing the multiphase fluid mixture (13) in a pipe section (21) having a measurement section (24);
- submitting the multiphase fluid mixture (13) to gamma rays (60), measuring an absorption of the gamma rays by at least one of the gas phase (40) and the liquid phase (50) of the multiphase fluid mixture (13) passing at the measurement section (24) and estimating a representative fraction for at least one of the gas phase (40) and the liquid phase (50);
wherein the flow rate measuring method further comprises:
- extracting a sample (103) having at least one of the gas phase (40) and the liquid phase (50) from the multiphase fluid mixture (13) flowing through the pipe section (21) by means of a sampling port (60) and transferring said sample to a sampling and measuring chamber (63) via a sample transfer line (61);
- regulating a pressure and a temperature to maintain the sample (103) from the sampling port (60) to the sampling and measuring chamber (63) at a pressure and a temperature substantially similar to the pressure and temperature of the multiphase fluid mixture (13) flowing through the pipe section (21);
- submitting the sample (103) to gamma rays, measuring an absorption of the gamma rays by the at least one of the gas phase (40) and the liquid phase (50) extracted from the sample (103) in the sampling and measuring chamber (63) and estimating a linear attenuation (LA) related to the at least one of the gas phase (40) and the liquid phase (50) extracted from the sample (103); and
- correcting the estimated representative fraction for the at least one of the gas phase (40) and the liquid phase (50) of the multiphase fluid mixture (13) based on said linear attenuation (LA).

14. The flow rate measuring method according to claim 13, wherein the method further comprises the step of filtering the sample (103) for removing an undesirable phase.

15. The flow rate measuring method according to claim 13 or 14, wherein additional physical and chemical measurements are performed on the sample (103) within the transfer line (61) or within the sampling and measuring chamber (63).

16. The flow rate measuring method according to anyone of the claims 13 to 15, wherein the method further comprises measuring the differential pressure of the multiphase fluid mixture between upstream and downstream parts (23, 25) and estimating a total flow rate of the multiphase fluid mixture (13).

**FIG. 1**

**FIG. 2**

**FIG. 3**

FIG. 4

FIG. 5

S11              S12

| MES: P T | MES: ΔP | MES: $\gamma$ | MES: Sample $P_S$, $T_S$, N |
|---|---|---|---|

| CALC: $\alpha_G$ $\alpha_L$ | CALC: LA |
|---|---|

S13

CALC: $\alpha_{G\text{-}COR}$ $\alpha_{L\text{-}COR}$

S14

| CALC $Q_{TOT}$ $Q_G$ $Q_L$ | $IN_G$ $IN_L$ |
|---|---|

S15

**FIG. 6**

Europäisches
Patentamt

European
Patent Office

Office européen
des brevets

# EUROPEAN SEARCH REPORT

**Application Number**

EP 11 30 5994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/067038 A1 (GEOSERVICES EQUIPEMENTS [FR]; DAVID PIERRE-YVES [FR]) 17 June 2010 (2010-06-17) * abstract; figure 1 * * page 1, line 1 - page 17, line 10 * ----- | 1-16 | INV. G01F1/74 G01F15/08 G01F25/00 G01N9/24 G01N23/12 |
| X | GB 2 406 386 A (SCHLUMBERGER HOLDINGS [VG]) 30 March 2005 (2005-03-30) * abstract; figures 4-6 * * page 1, line 9 - page 25, line 21 * ----- | 1-16 | |
| X | WO 00/49370 A1 (ANDREUSSI PAOLO [IT]) 24 August 2000 (2000-08-24) * abstract; figure 2 * * page 7, line 139 - line 31 * ----- | 1,2 | |
| A | | 3-16 | |
| A | WO 01/25762 A1 (DANIEL IND INC [US]) 12 April 2001 (2001-04-12) * abstract; figures 1, 2 * ----- | 1-16 | |
| A | US 4 776 210 A (BAILLIE LLOYD A [US] ET AL) 11 October 1988 (1988-10-11) * abstract * ----- | 1-16 | **TECHNICAL FIELDS SEARCHED (IPC)** G01F G01N |

The present search report has been drawn up for all claims

| Place of search | Date of completion of the search | Examiner |
|---|---|---|
| Munich | 2 December 2011 | Pisani, Francesca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 11 30 5994

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2011

| Patent document cited in search report | | Publication date | Patent family member(s) | | Publication date |
|---|---|---|---|---|---|
| WO 2010067038 | A1 | 17-06-2010 | FR<br>WO | 2939886 A1<br>2010067038 A1 | 18-06-2010<br>17-06-2010 |
| GB 2406386 | A | 30-03-2005 | EP<br>GB<br>GB<br>US<br>WO | 1668340 A1<br>2406386 A<br>2431010 A<br>2007193373 A1<br>2005031311 A1 | 14-06-2006<br>30-03-2005<br>11-04-2007<br>23-08-2007<br>07-04-2005 |
| WO 0049370 | A1 | 24-08-2000 | AU<br>CA<br>DE<br>DE<br>EP<br>NO<br>US<br>WO | 3272599 A<br>2359622 A1<br>69910447 D1<br>69910447 T2<br>1163495 A1<br>20014016 A<br>6546809 B1<br>0049370 A1 | 04-09-2000<br>24-08-2000<br>18-09-2003<br>24-06-2004<br>19-12-2001<br>17-08-2001<br>15-04-2003<br>24-08-2000 |
| WO 0125762 | A1 | 12-04-2001 | AU<br>CA<br>EP<br>NO<br>WO | 7751300 A<br>2385283 A1<br>1218728 A1<br>20021571 A<br>0125762 A1 | 10-05-2001<br>12-04-2001<br>03-07-2002<br>03-06-2002<br>12-04-2001 |
| US 4776210 | A | 11-10-1988 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9910712 A
- WO 0250522 A